# EUROPEAN PATENT SPECIFICATION

(11) **EP 0 321 264 B1**
(45) Date of publication and mention of the grant of the patent: **10.11.1993**
(21) Application number: 88311914.1
(22) Date of filing: 16.12.1988
(51) Int. Cl.: B32B 27/08, B32B 31/24, C08J 5/12, A47K 1/00, B32B 31/00

(54) **Multilayer polymeric composite, method for its manufacture, and lightweight durable articles fabricated therefrom**
Mehrschichtige Polymerzusammensetzung, Methode zu ihrer Herstellung und daraus hergestellte leichte und dauerhafte Gegenstände
Composé polymère multicouche, méthode pour sa fabrication, et articles légers et durables fabriqués à partir de celui-ci

(30) Priority: 18.12.1987 US 134822; 18.12.1987 US 134816
(43) Date of publication of application: 21.06.1989
(73) Proprietor: AMERICAN STANDARD INC., New York, N.Y. 10036-7776 (US)
(72) Inventor: Graefe, Peter U., New Jersey 07712 (US); Kuszaj, Karl T., New Jersey 08816 (US)
(74) Representative: Bedggood, Guy Stuart

(56) References cited:
- EP-A- 0 205 145
- DE-A- 1 629 286
- US-A- 4 361 626

## Description

This invention relates to a multilayer polymeric composite and articles fabricated therefrom, in which a polymeric surface layer is chemically bonded to a cross-linked, isocyanate-modified thermosetting unsaturated polyester or polyether resin layer to provide a high impact strength, delamination-resistant structure. These articles include plumbing fixtures, e.g., bathtubs, shower receptors, lavatories, kitchen sinks, etc., in which the relatively thin polymeric cosmetic surface or finish layer is chemically bonded to the relatively thick, reinforced, cross-linked, isocyanate-modified dense thermosetting unsaturated polyester or polyether resin foam layer to provide the delamination-resistant structure.

U.S. Patent No. 4,664,982 describes a composite structure, e.g., a reinforced enameled steel product, having high impact strength and thermal shock resistance. The composite structure is formed having bonded thereto a finish layer on one side thereof and on the other side a layer of reinforced plastic to provide a laminate. While the composite structure possesses generally excellent physical and mechanical properties as a result of the chemical bonding, or union, of the reinforced plastic layer to the enameled steel layer, due to the presence of steel, the structure is fairly heavy for a given level of strength and stiffness. Other disclosures of the chemical bonding of an organic polymeric material to an inorganic material such as metal, glass or ceramic can be found in U.S. Patent Nos. 3,477,869; 3,661,623; 3,671,562; 3,705,911; 3,706,592; 3,754,971; 3,956,353; 4,147,712; and, 4,156,677, among others.

Numerous unsaturated polyesters and polyethers including those modified by reaction with isocyanates, and cross-linked dense foams prepared therefrom are known in the art.

Borgnaes et al. (Ashland Chemical Company), "RIMing of Low Viscosity Crosslinkable Alcohols with Diisocyanates", a paper presented at a meeting of the Polyurethane Manufacturer's Association in Miami, Florida on October 18, 1983, describes the chemistry of a commercially available unsaturated monoalcohol ester monomer, Ashland Chemical Company's V110-2, and the aromatic diisocyanate adduct of the ester. This monomer and its aromatic diisocyanate adduct are among the useful polyester materials which can be used in whole or in part to provide the polymeric composite of the present invention. A generic disclosure of the unsaturated monoalcohol ester monomer may be found in U.S. Patent No. 3,663,599. Ashland Chemical Company's polyester and its use in the reaction injection molding (RIM) of fiber-reinforced composite structures are discussed in its product information brochures ASHLAND V11O-2, ARIMAX 1000 SERIES RESINS and ARIMAX 1000 SYSTEM. Amoco Chemicals Corporation's Technical Service Report Nos. GTSR 18 ("Updated Hybrid Resin Technology"), GTSR 26 ("Aromatic Mixed Esters For Urethane Applications"), GTSR 27 ("Polyester Polyols for Reaction Injection Molding") and GTSR 32 ("Aromatic Polyester Thermoplastic Urethanes Program Summary") describe another type of isocyanate-modified polyester which can be used in the manufacture of the polymeric composite structure herein.

U.S. Patent No. 3,367,992 describes thermosetting foams based on ester monomers which, like Ashland Chemical Company's V11O-2 ester monomer, contain both terminal hydroxyl functionality (as part of a carboxylic acid group) and terminal ethylenic unsaturation. Adducts of the ester monomers with a polyfunctional material such as a polyisocyanate are also described. Other disclosures of thermosetting unsaturated polyesters and/or their polyisocyanate adducts can be found in U.S. Patent Nos. 3,772,241; 3,823,099; 3,883,612; 4,119,510; 4,216,294; Reissue No. 31,468 (of 4,256,910); 4,280,979; 4,314,036; 4,358,548; and, 4,464,320. For still other useful polyester materials, reference may be made to "Polyesters, Unsaturated" in the Encyclopedia of Polymer Science and Technology, Vol. 11, pp. 129 et seq., Bjorkstein et al., Polyesters and Their Applications, 4th ed., Reinhold Publishing Company, New York (1960) and Boeing, Unsaturated Polyesters: Structures and Properties, Elsevier Publishing Company, Amsterdam (1964). U.S. Patent Nos. 3,654,224 and 3,917,666, among others, describe unsaturated polyethers which are useful in the practice of the present invention.

Multilayer polymeric composites in which a polymeric layer or coating is associated with a thermosetting polymer substrate are known. U.S. Patent No. 3,257,266 describes a fiber-reinforced unsaturated polyester foam structure possessing a weatherable polyvinyl fluoride facing. U.S. Patent No. 4,053,545 describes a laminated structural foam possessing an injection molded thermoplastic fiber-reinforced dense foam backing, e.g., one of polyethylene or polystyrene, adhesively bonded to a thermoformed finish layer, e.g., one of acrylic such as Swedcast cast acrylic sheet type 300. The laminated foam is said to be useful in the manufacture of wash basins, shower stalls, bathtubs, etc. No mention or suggestion is made in this patent of chemical bonding a thermosetting foam backing layer to a thermoplastic finish layer.

U.K. Patent Specification No. 904,763 describes a bathtub possessing a basic shell formed of thermoplastic material, e.g., a polymethacrylic acid ester, and a foamed synthetic resin material basic body. A foamed synthetic resin, e.g., a polyurethane foam, interposed between the shell and basic body may be bonded thereto. Solvent or chemical bonding of adjacent lamina is neither disclosed nor suggested.

U.K. Patent Applications GB 2 040 676A and GB 2 148 786A both disclose a laminar bathtub construction in which a thermoformed acrylic surface layer is backed with a fiber-reinforced rigid backing layer. Neither disclosure suggests a chemical bonding procedure. Delamination of the finish layer from the backing layer is a problem with bathtubs and other plumbing features constructed with laminates of the type illustrated in these disclosures.

In addition, U.S. Patent No. 4,130,614 describes a structural laminate possessing a fiber-reinforced polyester-urethane foam backing layer and a facing sheet such as paper, acrylic film and polyvinylfluoride film. U.S. Patent No. 4,315,964 describes a laminate possessing a cured layer of glass fiber-reinforced unsaturated polyester and a surface layer of polyvinyl fluoride film. RIM is one of several processing techniques which can be used to manufacture the laminate. U.S. Patent No. 4,551,390 describes the molding of multi-ply polymeric composites employing thick molding compounds (TMC), bulk molding compounds (BMC) or sheet molding compounds (SMC) and unsaturated ester monomers such as those disclosed in U.S. Patent Nos. 3,772,241 and 3,883,612, supra.

While none of the foregoing prior patents discloses or suggests the chemical bonding of a polymeric layer or coating to a thermosetting polymer substrate, the chemical bonding of dissimilar organic polymers is known. According to U.S. Patent No. 3,501,564, a non-cured polyurethane elastomer layer and a different non-cured polymer surface layer are simultaneously cured to provide permanent unification or cross-linking or chemical and mechanical integration thereof. The non-cured surface polymer can be an epoxy resin which has been applied to a mold surface and cured only to the point of being self-sustaining. The heat produced by the curing polyurethane layer will effect the curing of the epoxy surface layer and also result in the bonding of the two layers as previously described. U.S. Patent Nos. 3,507,114; 3,716,604; 3,813,308; 4,053,680; and, 4,232,608 describe the chemical cross-linking of the polymer matrix component of a solid rocket propellant with the polymeric component of the rocket motor casing, or liner. U.S. Patent No. 3,507,114 employs a diisocyanate to react with the hydroxyl groups of a hydroxyl-terminated polybutadiene, the polymer which is common to both the propellant matrix and the liner. Similar approaches to chemical bonding are disclosed in aforementioned U.S. Patent Nos. 3,716,604, 3,813,308 and 4,232,608 as well as in U.S. Patent No. 4,337,111. U.S. Patent No. 3,725,174 describes the chemical bonding of at least two layers of normally incompatible polymers, e.g., a highly hydrogen-bonded polymer such as cellulose and a thermoplastic polymer such as polyethylene, employing an ethylenically unsaturated carboxylic acid or anhydride such as maleic anhydride and a free radical initiator. U.S. Patent No. 3,764,370 achieves chemical cross-linking of a resin substrate to a resin coating by generating "living" radicals at the surface of the resin substrate employing ultraviolet light radiation, the "living radicals" then reacting with suitable groups possessed by the resin coating. U.S. Patent No. 3,959,521 describes chemically uniting a resinous topcoat to a polymeric base by applying to the latter an undercoat based on a composition containing both ethylenically unsaturated groups and free isocyanate groups, applying the topcoat which also contains ethylenically unsaturated groups and curing both the undercoat and the topcoat. U.S. Patent No. 4,282,285 describes a RIM process for making automobile bumper fascia in which a liquid microcellular polyurethane reacting mixture is polymerized against a decorative or protective transfer coating containing a polyurethane catalyst. The catalyst acts to bond the transfer coating to the polyurethane so that the shaped part upon removal from the mold contains a firmly adherent coating of the transfer coating composition. The transfer coating can be either a thermoplastic or a thermosetting polymer, with or without a plasticizer. Examples of useful transfer coatings include acrylic and acrylic ester polymers, pre-reacted urethane polymers, saturated and unsaturated polyesters, epoxy esters, cellulose esters, polyolefins, vinyl and vinyl-melamine polymers. U.S. Patent Nos. 4,333,987, 4,337,296 and 4,361,626 describe related procedures for chemically bonding dissimilar polymeric materials, e.g., a vinyl resin material and a polyurethane, to provide multi-layer sheet materials such as resilient floor, wall or ceiling coverings, or resilient desk, table or counter tops.

US-A-4 361 626 (supra) specifically shows a method of making multi-layered products, in particular resilient coverings for surfaces. In that specification, a top coating comprising a polyurethane resin is applied to a vinyl resin wear layer, which vinyl layer is itself bonded to a base synthetic polymeric layer with a base layer or substrate. Such multi-layered products are however not suitable for the manufacture of composites of high impact strength and delamination resistance with which the present invention is concerned, specifically for products in which such characteristics are required such as plumbing fixtures i.e. sanitaryware articles.

None of the foregoing prior patents relating to the chemical bonding of dissimilar polymeric materials even remotely suggests the application of chemical bonding to the manufacture of a composite, or laminate, possessing a polymeric cosmetic layer and a cross-linked, isocyanate-modified, thermosetting polyester or polyether resin substrate layer as in the present invention.

It is an object of the present invention to provide a multilayer polymeric composite which is significantly lighter than a metal-containing, e.g., steel-containing, polymeric composite for an approximately equivalent level of strength and stiffness.

It is a further object of the present invention to provide an article, including a plumbing fixture, e.g., a bathtub, shower receptor, lavatory, kitchen sink, etc., constructed from a multilayer polymeric composite which is significantly lighter than a metal-containing, e.g., steel-containing, polymeric composite for an approximately equivalent level of strength and stiffness.

It is another object of the present invention to provide a multilayer polymer composite or an article manufactured therefrom which is exceptionally resistant to delamination due to the chemical bonding of dissimilar polymer layers.

It is yet another object of the present invention to provide a multilayer polymeric composite or an article manufactured therefrom which readily lends itself to manufacture in whole or in part by RIM or RRIM technology.

Accordingly, in one aspect the present invention provides a polymeric composite of high impact strength and delamination resistance comprising a polymeric cosmetic layer, and a cross-linked isocyanate-modified thermosetting unsaturated polyester and/or polyether resin substrate layer in mutual contact therewith, wherein:
a) the polymeric cosmetic layer, prior to the curing of the substrate layer possesses, at least on the surface thereof to be bonded to the substrate layer, a functionality chemically reactive directly or via a bifunctional coupling agent with an isocyanate functionality of the substrate layer; and
b) the cross-linked thermosetting unsaturated polyester and/or polyether resin substrate layer, prior to curing, possesses a free isocyanate functionality such that upon curing while in mutual contact with a surface of the cosmetic layer, the substrate layer becomes bonded to the cosmetic layer through chemical linkages formed i) by reaction of the chemically reactive functionality and the isocyanate functionality or ii) by reaction of the chemically reactive functionality respectively with a first reactive functional group of the bifunctional coupling agent and reaction of the isocyanate functionality with the second functional groups of the bifunctional coupling agent.

In another aspect of the invention a method is provided for forming a polymeric composite of high impact strength and resistance to delamination comprising a polymeric cosmetic layer, and a cross-linked isocyanate-modified thermosetting unsaturated polyester and/or polyether resin substrate layer, wherein the method comprises the steps of:
a) providing a polymeric cosmetic layer which possesses on at least the surface thereof to be bonded to a substrate layer a functionality chemically reactive directly or via a bifunctional coupling agent with an isocyanate functionality of the substrate layer;
b) contacting the surface of the cosmetic layer which possesses the said chemically-reactive functionality with the precursor components to a cross-linked, thermosetting unsaturated polyester and/or polyether resin substrate layer, at least one component of which contains a free isocyanate functionality capable, under conditions resulting in the cure of the substrate layer, of forming chemical linkages between the cosmetic layer and the substrate layer by reaction of the chemically reactive functionality and the isocyanate functionality or by reaction of the chemically reactive functionality and the isocyanate functionality respectively with the respective functional groups of the bifunctional coupling agent; and
c) subjecting the combined cosmetic layer and substrate layer to conditions effecting the cure of the latter and the reaction of the chemically-reactive functionality and the isocyanate functionality, or the reaction of the chemically reactive functionality and the isocyanate functionality with the respective functional groups of the bifunctional coupling agent, thereby providing the polymeric composite.

The polymeric composite is useful in the construction of various articles, e.g., plumbing fixtures, which utilize a relatively thin cosmetic layer and a relatively thick, reinforced substrate layer to provide good resistance to delamination and high impact strength.

The high strength of the chemical linkages resulting from the foregoing method results in a composite structure which is significantly higher in impact strength and more resistant to delamination than bonds obtained with known and conventional contact adhesives. Apart from its excellent delamination resistance, the multilayer polymer composite herein combines exceptionally light weight with a high level of mechanical strength and stiffness as well as high corrosion resistance. As such, the polymeric composite of this invention is well suited for the replacement of more traditional materials, particularly metals such as steel and aluminium but other polymeric materials as well, for a great variety of structures including construction panels, doors, interior and exterior automotive body elements, loadbearing components, and the like. In addition to its desirable chemical and mechanical properties, the polymer composite of this invention has the advantage of being readily manufactured by known and conventional RIM and RRIM techniques. Employing such techniques, all sorts of molded devices, parts, elements, etc., can be efficiently manufactured at low cost with the foregoing polymeric composite making the composite still more competitive with those materials of construction which it is intended to replace.

Various embodiments of the invention will now be described by way of example, with reference to the drawings, in which:-
Fig. 1 is a greatly enlarged sectional view of the polymeric composite of this invention;
Fig. 2 is an isometric view of a panel constructed from the polymeric composite of Fig. 1:
Fig. 3 is a schematic diagram of the material flow of a RIM process for manufacturing the composite of this invention;
Fig. 4 is a top plan view of a bathtub constructed in accordance with the invention;
Fig. 5 is an elevational view of one end of the bathtub of Fig. 4;
Fig. 6 is a top plan view of a lavatory constructed in accordance with the invention;
Fig. 7 is an elevational view of the lavatory of Fig. 6;

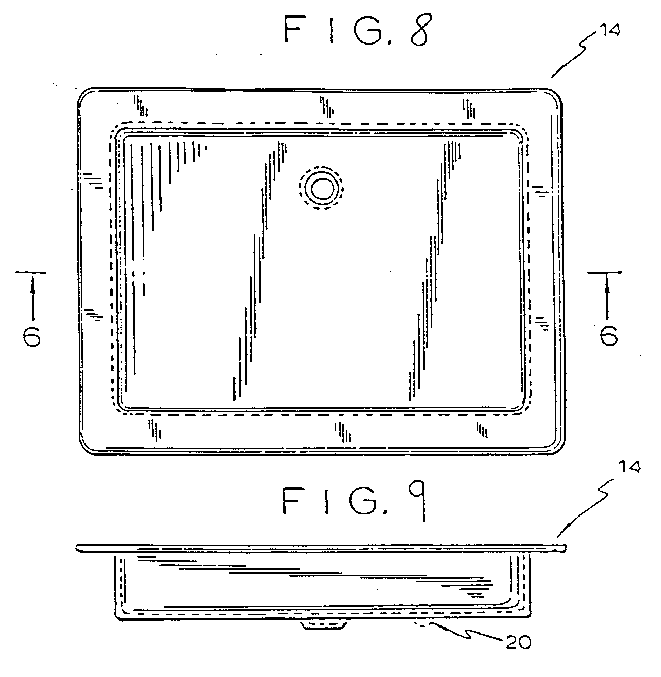

Fig. 8 is a top plan view of a shower receptor constructed in accordance with the invention; and,
Fig. 9 is an elevational view of the shower receptor of Fig. 8.

Cosmetic or finish layer (a) can be fabricated from any one of several thermoplastic and thermosetting resins. Alloys and blends of resins are also contemplated. In general, the selected resin will be chosen with the end use of the composite in mind, e.g, high surface gloss and hardness (for resistance to scratching) in the case of a decorative panel. In the manufacture of plumbing fixtures for example, a high gloss (glass) transition temperature and good resistance to surface abrasion (scratching) are advantageous since plumbing fixtures such as bathtubs, shower receptors, and the like, must function well over a broad range of temperature and retain an attractive appearance.

It is also within the scope of this invention to provide cosmetic layer (a) as two, three or even more individual layers of different thermoplastic and/or thermosetting resins. For example, an acrylonitrile-butadiene-styrene terpolymer can be arranged as the outermost layer of a two-ply laminate with a coextruded acrylonitrile-butadiene-styrene-vinyl alcohol copolymer (derived in a known manner from the hydrolysis of the corresponding acrylonitrile-butadiene-styrene-vinyl acetate copolymer) serving as the underlying layer. The resulting laminar structure possesses a chemically inert upper surface and a chemically reactive lower surface (due to the presence of hydroxyl functionality contributed by the interpolymerized vinyl alcohol monomer groups) providing sites for reaction with suitably reactive sites possessed by substrate layer (b), e.g., isocyanate groups, as will be more fully explained.

Thermoplastic materials (inclusive of all resins which can be processed, e.g., extruded, at normal thermoplastic processing temperatures) useful in providing cosmetic layer (a) include acrylonitrile-butadiene-styrene terpolymer and related resins such as acrylonitrile-chlorinated polyethylene-styrene terpolymer, acrylic-styrene-acrylonitrile terpolymer and olefin-modified styrene-acrylonitrile terpolymer; acetal homopolymer (polyoxymethylene) and copolymer; acrylic resins, in particular, polymethylmethacrylate; polyimide and bismaleimide resins; ionomer resins; melamine resins; nylon homopolymers and copolymers such as polyamide-imide; polyesters such as polyethylene terephthalate and polybutylene terephthalate; phenylene-based resins such as modified polyphenylene ether and modified polyphenylene oxide; polyarylate; sulfone polymers such as polysulfone; polyarylsulfone and polyethersulfone; polyolefin homopolymers and copolymers such as polyethylene, polypropylene, polybutylene, polymethylpentene, ethylene-propylene copolymer, ethylene-propylene-butylene terpolymer, ethylene-methyl acrylate copolymer, ethylene-ethyl acrylate copolymers, ethylene-vinyl acetate copolymer; polyetheretherketone; styrene homopolymers and copolymers such as polystyrene, styrene-acrylonitrile copolymer and styrene-butadiene copolymer; polyurethane, polyvinyl and polyvinylidene halides such as polyvinyl chloride, polyvinylidene chloride and polyvinyl fluoride; thermoplastic elastomers, and the like.

Alloys and blends of the foregoing which can be used to provide cosmetic layer (a) include acrylonitrile-butadiene-styrene and polycarbonate, polytetrafluoroethylene, polyvinylchloride or polysulfone; acrylic-styrene-acrylonitrile terpolymer and polyvinylchloride or polymethylmethacrylate, acetal resin and an elastomer; polyvinyl chloride and acrylic; nylon and ionomers, ethylene copolymer, ethylene-propylene-diene monomer, polyethylene or polytetrafluoroethylene; polycarbonate together with polybutylene terephthalate and an elastomer; polycarbonate and polyethylene, polyethylene terephthalate or styrene-maleic anhydride copolymer; polybutylene terephthalate and polyethylene terephthalate or an elastomer; polyethylene terephthalate and polymethyl-methacrylate, an elastomer or polysulfone; polypropylene and ethylene-propylene-diene monomer or ethylene-propylene monomer; polyethylene and polybutylene; polyolefin and ionomer resin; polyphenylene ether and polystyrene or polyamide; polyphenylene sulfide and an elastomer; styrene-acrylonitrile and ethylene-propylene-diene monomer; styrene-maleic anhydride copolymer and polystyrene; and, polyvinyl chloride and ethylene vinyl acetate, chlorinated polyethylene, nitrile rubber or polyurethane.

Among the thermosetting polymers which can be used to provide cosmetic layer (a) are amino resins; epoxy resins; phenolics; thermosetting polyesters, alkyds and polyimides; and, polyurethanes.

Cosmetic layer (a) and/or substrate layer (b) can contain one or more additives in the customary amounts, e.g., inorganic and organic dyes, pigments and antioxidants; reinforcements based on treated or non-treated, non-woven or woven, fibers of such organic and inorganic materials as polyester, polyamide, particularly an aramid such as DuPont's Kevlar, carbon, boron, glass and hybrids of the foregoing such as aramid and carbon or glass, carbon and glass, etc.; treated and non-treated fillers and extenders such as calcium carbonate, kaolin, talc, alumina trihydrate, wood-and shell flours, silica, diatomaceous earth, glass spheres, wollastonite, mica and metallic powders; colorants, flame retardants; foaming agents; heat stabilizers; impact modifiers; plasticizers; and, ultraviolet stabilizers.

Cosmetic layer (a) can represent from about 0.1 to as much as about 50 percent or more of the total thickness of the composite and for most applications, including when used to manufacture plumbing fixtures, will vary from about 0.5 to about 30 percent of total thickness. At the lower end of these ranges, surface layer (a) can be thought of as a coating and, indeed, can be applied to a suitable temporary support, e.g., a male mold member, by coating, spraying and similar procedures. The thickness of cosmetic layer (a) need not be uniform. In fact, for some applications, it may be desired to selectively increase the thickness of cosmetic layer (a) in certain areas, e.g., where this layer, or the particular article (i.e., plumbing fixture), would be most subject to abrasive erosion or other wear.

The exposed surface of cosmetic layer (a) can be modified or texturized in known and conventional ways so as to simulate the natural appearance of wood, brick, stone, metal or other material. Thus, for example, the base of a bathtub can be provided with a non-slip surface as a safety feature, a sink can be made to simulate marble for aesthetic effect, and so forth.

Substrate layer (b) is a cross-linked, isocyanate-modified, thermosetting unsaturated polyester resin, and/or unsaturated polyether resin or mixtures of such resins.

In the fabrication of some articles, i.e., plumbing fixtures the substrate layer (b) is preferably reinforced by the formation of a cross-linked, isocyanate-modified, thermosetting unsaturated polyester dense foam resin, unsaturated polyether dense foam resin or mixture of such resins. Since the mechanical properties of plumbing fixtures described herein are largely due to the substrate layer (cosmetic layer (a), as its name implies, being present primarily to provide an attractive appearance, or finish, to the unit), the substrate layer will ordinarily be much thicker than the cosmetic layer. In addition, the substrate layer (b) will contain one or more reinforcements, e.g., those based on treated or non-treated, non-woven or woven, fibers of such organic and inorganic materials as polyester, polyamide (particularly an aramid such as DuPont's Kevlar), carbon, boron, glass and hybrids of the foregoing such as aramid and carbon or glass, carbon and glass, etc., in the customary amounts. The substrate layer can optionally contain the usual amounts of treated and non-treated fillers and extenders such as calcium carbonate, kaolin, talc, alumina trihydrate, wood-and shell flours, silica, diatomaceous earth, glass spheres, wollastonite, mica and metallic powders; colorants, flame retardants; foaming agents; heat stabilizers; impact modifiers; plasticizers; and, ultraviolet stabilizers, and so forth.

In general any of the known and conventional initially liquid, ethylenically unsaturated polyesters and polyethers possessing one or more active hydrogen-containing groups, e.g., hydroxyl, carboxylic acid, amine, etc., can be used to provide substrate layer (b) herein. The unsaturated polyesters are generally prepared by the polyesterification of polycarboxylic acid and/or polycarboxylic acid anhydrides and polyols, usually glycols. At least one of the ingredients in the polyester contains ethylenic unsaturation, usually the polycarboxylic acid or corresponding anhydride. Typical unsaturated polyester resins are fabricated from dicarboxylic acids such as phthalic acid, phthalic anhydride, adipic acid, succinic acid, tetrahydrophthalic acid or anhydride, tetrabromophthalic acid or anhydride, maleic acid or anhydride or fumaric acid. Typical glycols include ethylene glycol, propylene glycol, butylene glycol, neopentyl glycol, diethylene glycol, dipropylene glycol, polyethylene glycol and polypropylene glycol. Occasionally trihydric and higher polyols are included in the polyester such as trimethylol ethane, trimethylol propane, pentaerythritol, etc. Customarily a slight stoichiometric excess of glycol is employed in preparing the unsaturated polyester.

Unsaturated polyester resin syrups are obtained when an unsaturated polyester resin is combined with copolymerizable monomers which contain terminal vinyl groups. These monomers are well known in the art and include hydrocarbon monomers such as styrene, alphamethylstyrene, methylstyrene, 2,4-dimethylstyrene, ethylstyrene, isopropylstyrene, butylstyrene, phenylstyrene, cyclohexylstyrene, benzylstyrene, and the like, substituted styrenes such as cyanostyrene, nitrostyrene, N,N-dimethylaminostyrene, acetoxystyrene, methyl 4-vinylbenzoate, phenoxystyrene, p-vinyl diphenyl sulfide, p-vinylphenyl phenyl dioxide, and the like; acrylic and substituted acrylic monomers such as acrylic acid, methacrylic acid, methyl acrylate, 2-hydroxyethyl acrylate, 2-hydroxyethyl methacrylate, methyl methacrylate, cyclohexyl methacrylate, benzyl methacrylate, isopropyl methacrylate, octyl methacrylate, acrylonitrile, methacrylonitrile, ethyl alphaethoxyacrylate, methyl alpha-acetaminoacrylate, butyl acrylate, 2-ethylhexyl acrylate, phenyl acrylate, phenyl methacrylate, N,N-dimethylacrylamide, N,N-dibenzylacrylamide, N-butylacrylamide, methacrylyl formamide, and the like; vinyl and vinylidene halides, e.g., vinyl chloride, vinyl fluoride, vinylidene chloride, and the like; vinyl esters, vinyl ethers, vinyl ketones, etc., such as vinyl acetate, vinyl alcohol, vinyl butyrate, isopropenyl acetate, vinyl formate, vinyl acrylate, vinyl methacrylate, vinyl methoxy acetate, vinyl benzoate, vinyl toluene, vinyl naphthalene, vinyl methyl ether, vinyl ethyl ether, vinyl propyl ethers, vinyl butyl ethers, vinyl 2-ethylhexyl ether, vinyl phenyl ether, vinyl 2-methoxyethyl ether, methoxybutadiene, vinyl 2-butoxyethyl ether, 3,4-dihydro-1,2-pyran, 2-butoxy-2'-vinyloxy diethyl ether, vinyl 2-ethylmercaptoethyl ether, vinyl methyl ketone, vinyl ethyl ketone, vinyl phenyl ketone, vinyl ethyl sulfide, vinyl ethyl sulfone, N-methyl-N-vinyl acetamide, N-vinyl-pyrrolidone, vinyl imidazole, divinyl sulfide, divinyl sulfoxide, divinyl sulfone, sodium vinyl sulfonate, methyl vinyl sulfonate, N-vinyl pyrrole, and the like; dimethyl fumarate, dimethyl maleate, maleic acid crotonic acid, fumaric acid, itaconic acid, monomethyl itaconate, t-butylaminoethyl methacrylate, dimethylaminoethyl methacrylate, dimethylaminoethyl methacrylate, glycidyl acrylate, allyl alcohol, glycol monoesters of itaconic acid, vinyl pyridine, and the like; butadiene, isoprene, 1,4-pentadiene, 1,6-hexadiene, 1,7-octadiene. Any of the known polymerizable monomers can be used and the compounds listed above are illustrative and not restrictive of the monomers suitable for use in this invention. Customarily the copolymerizable monomer is provided in an amount to constitute from about 10 to about 70 weight percent of the unsaturated polyester resin syrup, i.e., the unsaturated polyester resin comprises from about 90 to about 30 weight percent of the resin syrup.

A preferred type of unsaturated polyester is one possessing both terminal ethylenic unsaturation and at least one terminal active hydrogen-containing group such as a hydroxyl, carboxylic acid and/or an amine group. Polyesters of this type include ASHLAND V110-2 monomer (Ashland Chemical Company), and those described in U.S. Patent No. 3,663,599, supra, the contents of which are incorporated by reference herein. The preferred unsaturated polyester is actually a mixture of polyesters of the general formula 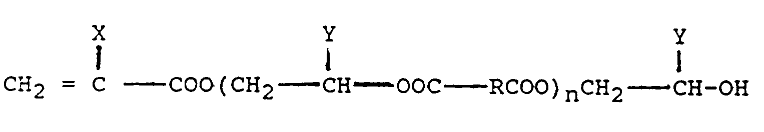
wherein X is hydrogen, methyl or ethyl, Y is hydrogen, methyl, phenyl or CH₂Z, in which Z is a halogen or an alkyl group, R represents an aliphatic or alicyclic group containing ethylenic unsaturation and n is an integer of from 0 to 4. The polyesters are prepared by reacting an ethylenically unsaturated carboxylic acid of the structure 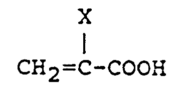
with a carboxylic acid anhydride of the structure 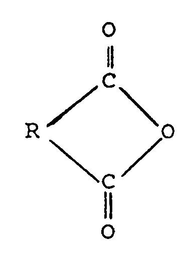
and a monoepoxide of the general formula 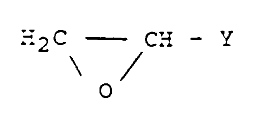
wherein the significance of X, Y and R is as stated above. Examples of suitable ethylenicaly unsaturated carboxylic acids include acrylic acid, methacrylic acid, ethylacrylic acid, and the like, methacrylic acid being especially preferred. Of the useful carboxylic acid anhydrides, maleic anhydride is especially preferred. Useful monopoxides include ethylene oxide, propylene oxide, butylene oxide, styrene oxide, epichlorohydrin, methylepichlorohydrin, and the like, propylene oxide being especially preferred. An especially preferred polyester, ASHLAND V110-2 monomer (Ashland Chemical Company), is prepared by reacting methacrylic acid with maleic anhydride and propylene oxide to provide a mixture of maleate esters of the structure 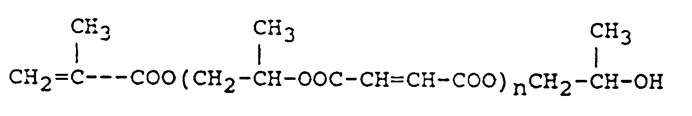
where n is 0 to 4. In a known manner, the maleate esters can, if desired, be isomerized to the corresponding fumarate esters, e.g., employing an amine. Reaction products obtained from the fumarate esters tend to be harder and more resistant to heat distortion than those obtained with the maleate ester.

When employing the aforesaid preferred polyesters, it is advantageous to provide them in combination with one or more copolymerizable monomers, unsaturated polyesters and/or unsaturated polyester syrups such as those previously mentioned. For example, in a mixture of such preferred polyester(s) and any of the known polyester syrups referred to above, the former can represent from about 10 to about 90, and preferably from about 20 to about 80 weight percent, of the total.

Unsaturated polyethers which are useful in the preparation of the resin of substrate layer (b) can be prepared by the homopolymerization or copolymerization of alkylene oxides and unsaturated difunctional initiators such as the ethylenically unsaturated diols, dicarboxylic acids, carboxylic acid anhydrides, etc. Suitable unsaturated polyethers are described in the non-patent and patent literature, e.g., U.S. Patent Nos. 3,654,224 and 3,917,666. The polyethers can also be combined with substantial quantities of copolymerizable monomer(s), functional group-terminated unsaturated polyester(s) and/or unsaturated polyester syrup(s) such as any of those previously described.

Cross-linking of the unsaturated polyester/polyether component(s) and copolymerization of the vinyl group-terminated monomer component of the substrate layer reaction mixture is accomplished with one or more free radical polymerization initiators, or catalysts, notably organic peroxides, including di-t-butyl peroxide, 2,5-dimethyl-2,5-dimethyl-2,5-bis(t-butylperoxy)hexane, 2,5-dimethyl-2-5-bis(t-butylperoxy)hexane-3, di-t-amyl peroxide, t-butyl-2-hydroxyethyl peroxide, a,a′-bis(t-butylperoxy)diisopropyl benzene, benzoyl peroxide, diisobutyryl peroxide, 2,4-dichlorobenzoyl peroxide, diisononanoyl peroxide, decanoyl peroxide, lauroyl peroxide, acetyl peroxide, succinic acid peroxide, bis-p-chlorobenzoyl peroxide, 2,5-dihydroperoxy-2,5-dimethylhexane, cumene hydroperoxide, t-butyl hydroperoxide, p-methane hydroperoxide, diisopropylbenzene hydroperoxide, 1,1,3,3-tetramethyl butyl hydroperoxide, dicumyl peroxide, di(n-propyl)peroxy dicarbonate, diisopropyl peroxydicarbonate, di(sec-butyl)peroxydicarbonate, di(2-ethylhexyl) peroxydicarbonate, dicyclohexyl peroxydicarbonate, dicetyl peroxydicarbonate, bis-(4-t-butylcyclohexyl)peroxy- dicarbonate, t-butylperoxy isopropyl monocarbonate, 2,2-azobis-(isobutyronitrile), 1,1-bis(t-butyl peroxy-3,3,5-trimethylcyclohexane, t-butyl peroxyacetate, t-butyl peroxyisobutyrate, t-butyl peroxy-2-ethylhexanoate, t-butyl peroxy pivalate, t-butyl peroxyneodecanoate, t-butyl peroxymaleic acid, di-t-butyl diperoxyphthalate, 2,5-dimethyl-2,5-bis(benzoylperoxy)hexane, 2,3-dimethyl-bis(octanoylperoxy)hexane, t-butyl peroctoate, t-butyl perbenzoate, acetylcyclohexyl sulfonyl peroxide, acetyl sec-heptyl sulfonyl peroxide, 2-t-butylazo-2-cyano-4-methoxy-4-methyl pentane, 2-t-butylazo-2-cyano-4-methyl pentane, 2-t-butylazo-2-cyanopropane, methyl ethyl ketone peroxide, 2,4-pentanedione peroxide, cyclohexanone peroxide, etc. The concentration of free radical polymerization initiator is not critical and can be varied within wide limits. Up to a certain point (which can be readily experimentally determined for a given reaction mixture), increases in the concentration of the initiator/catalyst tend to result in increased cross-linking and vinyl monomer copolymerization but increases in initiator/catalyst beyond this point are unlikely to significantly affect conversion. As a representative range, the concentration of initiator/catalyst can vary from about 0.1 to about 5 weight percent based on the total weight of unsaturated polyester, polyether and copolymerizable vinyl group-terminated monomer.

The foregoing unsaturated polyester/polyether component(s) are modified with one or more organic polyisocyanates such as ethylene diisocyanate, ethylidene diisocyanate, propylene diisocyanate, butylene diisocyanate, cyclopentylene-1,3 diisocyanate, cyclohexylene-1,4-diisocyanate, cyclohexylene-1,2-diisocyanate, 2,4-tolylene diisocyanate (TDI) 2,6-tolylene diisocyanate, diphenylamethane 4,4′-diisocyanate (MDI) 2,2-diphenylpropane-4,4′-diisocyanate, p-phenylene diisocyanate, xylylene diisocyanate, 12,4-naphthylene diisocyanate, 1,5-naphthylene diisocyanate, diphenyl-4,4′-diisocyanate, azobenzene-4,4′-diisocyanate, diphenylsulfone-4,4′-diisocyanate, dichlorohexamethylene diisocyanate, tetramethylene diisocyanate, pentamethylene diisocyanate, hexamethylene diisocyanate, 1-chlorobenzene-2,4-diisocyanate, 4,4′4′-triisocyanatotriphenylmethane, 1,3,5-triisocyanato benzene, 2,4,6-triisocyanato toluene, 4,4′-dimethyl diphenylmethane-2,2′,5,5′tetraisocyanate, furfurylidene diisocyanate, and the like, as well as their mixtures.

The term "organic polyisocyanate" or, simply, "isocyanate" includes the isocyanate-terminated reaction products resulting from the reaction of the foregoing isocyanates with a polyol. Quasi-prepolymers such as the reaction products of excess tolylene diisocyanate and short chain polyoxypropylene diols or triols are preferred in those instances where ease of processing is desired. The term "organic polyisocyanate" also includes the known and conventional dimer and trimer (isocyanurate) analogs of the foregoing isocyanates.

A preferred isocyanate of this type is TDI dimer which is commercially available or can be synthesized from commercially available TDI. In general, it is especially preferred to use the readily accessible polyisocyanates such as 2,4- and 2,6-tolylene diisocyanate and mixtures of these isomers ("TDI"), polyphenylpolymethylene polyisocyanates of the type obtained by condensing aniline with formaldehyde, followed by phosgenation, "crude" MDI and distilled or "pure" MDI, and polyisocyanates containing carbodiimide groups, urethane groups, alophanate groups, isocyanurate groups, urea groups or biuret groups ("modified polyisocyanates"). Each of these materials is well known in the patent literature. Further typical examples of modified liquid MDI types of isocyanates are described in U.S. Patent No. 3,384,653 and various quasi-prepolymers are described in U.S. Patent Nos. 3,394,164; 3,644,457; 3,457,200; 3,883,771; 4,469,616; and 4,559,366, the disclosures of which are incorporated by reference herein.

The amount of organic polyisocyanate used is not critical and preferably ranges from an amount that provides from about 0.9 to about 1.2 isocyanate groups per active hydrogen-containing group of the unsaturated polyester/polyether. These amounts are suitable when the compositions are cast in a mold. Where RIM or RRIM techniques are used or a low pressure molding or sheet molding technique is employed, the range prefereably is from about 1 to about 1.1 isocyanate groups per active hydrogen-containing group. Catalysts which are useful in effecting the urethane-modifying reaction include (a) tertiary amines such as bis(dimethylamino-ethyl) ether, trimethylamine, triethylamine, N-methyl-morpholine, N-ethylmorpholine, N,N-dimethylbenzlamine, N,N-dimethylethanolamine, N,N,N′,N′-tetramethyl-1,3-butanediamine, triethylanolamine, 1,4-diazabicyclo[2.2.2]octane, pyridine oxide and the like; (b) tertiary phosphines such as trialkylphosphines, dialkylbenzylphosphines, and the like; (c) strong bases such as alkali and alkaline earth metal hydroxides, alkoxides and phenoxides; (d) acidic metal salts of strong acids such as ferric chloride, stannic chloride, stannous chloride, antimony trichloride, bismuth nitrate and chloride, and the like; (e) chelates of various metals such as those which can be obtained from acetylacetone, benzoylacetone, trifluoroacetylacetone, ethyl acetoacetate, silicylaldehyde, cyclopentanone-2-carboxylate, acetylacetoneimine, bis-acetylacetonealkyl-enediimines, salicyclaldehydeimine, and the like, with various metals such as Be, Mg, Zn, Cd, Pb, Ti, Zr, Sn, As, Bi, Cr, Mo, Mn, Fe, Co, Ni, or such ions as MoO₂++,UO₂++ and the like; (f) alcoholates and phenolates of various metals such as Ti(OR)₄, Sn(OR)₄, Sn(OR)₂, Al(OR)₃, and the like; wherein R is alkyl or aryl, and the reaction products of alcoholates with carboxylic acids, beta-diketones, and 2-(N,N-dialkylamino) alkanols, such as the well known chelates of titanium obtained by said or equivalent procedures; (g) salts of organic acids with a variety of metals such as alkali metals, alkaline earth metals, Al, Sn, Pb, Mn, Co, Ni and Cu, including, for example, sodium acetate, potassium laurate, calcium hexanoate, stannous acetate, stannous octoate, stannous oleate, lead octoate, metallic driers such as manganese and cobalt naphthenate, and the like; and, (h) organometallic derivatives of tetravalent tin, trivalent and pentavalent As, Sb, and Bi and metal carbonyls of iron and cobalt.

The organotin compounds deserve particular mention as catalysts for catalyzing the urethane-modifying reaction. These compounds include the dialkyltin salts of carboxylic acids, e.g., dibutyltin diacetate, dibutyltin dilaurate, dibutyltin maleate, dilauryltin diacetate, dioctyltin diacetate, dibutylin-bis(4-methylaminobenzoate), dibutyltin-bis(6-methylaminocaproate), and the like. Similarly, there may be used a trialkyltin hydroxide, dialkyltin oxide, dialkyltin dialkoxide, or dialkyltin dichloride. Examples of these compounds include trimethyltin hydroxide, tributyltin hydroxide, trioctyltin hydroxide, bitutyltin oxide, dioctyltin oxide, dilauryltin oxide, dibutyltin-bis(isopropoxide), dibutyltin-bis(2-dimethylaminopentylate), dibutyltin dichloride, dioctyltin dichloride, and the like.

The tertiary amines may be used as primary catalysts for accelerating the reactive hydrogen/isocyanate reaction or as secondary catalysts in combination with one or more of the above-noted metal catalysts, e.g., the organotin catalysts. Metal catalysts or combinations of metal catalysts can also be employed as the accelerating agents without the use of amines. The catalysts for catalyzing the urethane-modifying reaction are employed in small amounts, for example, from about 0.001 percent to about 5 percent, based on the combined weight of the polyisocyanate and the unsaturated polyester/polyether.

An extender can also be added to the reaction mixture providing substrate layer (b) in order to improve the load bearing and modulus properties of the cured material. Suitable extenders include low molecular weight polyols including ethylene glycol, diethylene glycol, 1,4-butanediol and the aromatic glycols, reaction products of alkylene oxides with aromatic amines or alcohols having two active hydrogens. Suitable aromatic glycols are the reaction products of alkylene oxides with amino aryl compounds and di(hydroxyalkoxy)aryl compounds, and preferably are the reaction products of ethylene oxide and aniline. Other suitable aromatic glycols include the ethylene oxide and propylene oxide adducts of bisphenol A and the propylene oxide adducts of aniline. Additional suitable extenders are the aromatic amines such as 4,4′-methylene bis(2-chloroaniline) and phenol-aromatic amine-aldehyde resins which are made by the reaction of a phenol such as phenol itself or a substituted phenol having at least one unsubstituted reactive position on the aromatic nucleus, an aldehyde such as formaldehyde or other aliphatic aldehyde and an aromatic amine such as aniline or other aromatic amine having at least one or two amino hydrogens and no or one nitrogen-bonded alkyl group and at least one unsubstituted position ortho or para to the amino group.

When the substrate layer being formed is a microcellular, or foam, product, foaming can be accomplished by employing a small amount of a blowing agent, such as CO₂ produced by water included in the reaction mixture (for example, from about 0.1 to about 5 weight percent of water, based upon total weight of the total reaction mixture, i.e., ethylenically unsaturated monomers, organic polyisocyanates, catalysts and other additives), or through the use of blowing agents which are vaporized by the exotherm of the reaction, or by a combination of the two methods. Illustrative blowing agents include halogenated hydrocarbons such as trichloromonofluoromethane, dichlorodifluoromethane, dichloromonofluoromethane, dichloromethane, trichloromethane, 1,1-dichloro-1-fluoroethane, 1,1,2-trichloro-1,2-trifluoromethane, hexafluorocyclobutane, octafluorocyclobutane, and the like. Another class of blowing agents include thermally unstable compounds which liberate gases upon heating, such as N,N′-dimethyl-N,N′-dinitrosoterephthalamide, and the like. The quantity of blowing agent employed will vary with such factors such as the density desired in the foamed product. In general, foam densities of from about 20 to about 90, and preferably from 40 to about 70, lbs per cubic foot are suitable. The unfoamed materials can, of course, be more dense, with suitable densities ranging up to 125 lbs per cubic foot and even higher.

When forming a foamed substrate layer, it may be advantageous to employ small amounts, e.g., about 0.01 percent to 5.0 percent by weight based on the total substrate layer reaction mixture, of a foam stabilizer, e.g., such as a "hydrolyzable" polysiloxane-polyoxyalkylene block copolymer such as the block copolymers described in U.S. Patent Nos. 2,834,748 and 2,917,480. Another useful class of foam stabilizers are the "nonhydrolyzable" polysiloxane-polyoxyalkylene block copolymers such as those described in U.S. Patent No. 3,505,377 and U.K. Patent Specification No. 1,220,471. These various polysiloxanepolyoxyalkylene block copolymers preferably contain from about 5 to about 50 weight percent of polysiloxane polymer with the remainder being polyoxyalkylene polymer.

It is, of course, within the scope of this invention to apply a second cosmetic layer (c) to the other side of substrate layer (b) in which case substrate layer (b) will function as the core of the resulting composite product. such an embodiment is an especially useful way to provide an essentially all-polymer door. The exposed surfaces of cosmetic layers (a) and (c) can, if desired, be made to reproduce the visual effect and texture of natural wood for a more pleasing appearance.

There are a number of ways in which the cosmetic layer and the substrate layer can be provided with, respectively, the first and second chemically reactive functionalities. So, for example, the cosmetic layer can be comprised of a polymer which contains chemically reactive groups within its structure, e.g., hydroxyl groups as in the previously mentioned case of an acrylonitrile-butadiene-styrene-vinyl alcohol resin. Another approach is to provide the cosmetic layer as a blend of two or more resins at least one of which possesses chemically reactive groups within its structure.

One convenient way in which such a blend can be provided is to apply to a surface of the cosmetic layer, e.g., one of acrylic resin, a primer, or chemical bonding agent, which is a solution of thermosetting phenolic resin capable of dissolving the cosmetic layer. In the case of an acrylic cosmetic layer, the presence of methyl methacrylate monomer in the primer will result in some dissolution of the resin, e.g., to a level of from about 0.5 to about 10 percent or more of the thickness of the layer depending upon the amount of monomer present and the duration of contact with the surface of the layer to which it has been applied. The primer can be applied one or more times in any suitable way, e.g., by brushing, spraying, etc. Within a short time of its application, e.g., from about 10 seconds to about 10 minutes (or longer if desired), the relatively volatile solvent component of the primer will have substantially evaporated leaving a surface containing chemically reactive free hydroxyl groups. The affected surface of the acrylic layer will remain chemically reactive for a relatively long period, e.g., up to 24 hours or even longer, following application of the primer. As a result of the foregoing partial dissolution of acrylic resin, the thermosetting phenolic resin will become blended therewith thereby effectively incorporating free hydroxyl functionality in the cosmetic layer which is available to react with free isocyanate functionality present in the precursor components of the substrate layer. During curing of the substrate layer, the hydroxyl groups present in the acrylic layer will have undergone reaction with the isocyanate groups in the substrate layer to form relatively strong urethane linkages which chemically unite the two layers.

In yet another variation of the chemical bonding system described above, chemically reactive groups present on the cosmetic layer and in the precursor components of the substrate layer can be made to react with a coupling agent containing appropriate chemically reactive functionalities. For example, the free hydroxyl groups of a primer-coated acrylic cosmetic layer and free isocyanate groups within the pre-cured substrate layer will react with a dicarboxylic acid such as maleic acid (which may initially be present as the corresponding anhydride) or a hydroxy-carboxylic acid such as 1-hydroxycaproic acid (which may initially be present at the corresponding lactone) present in either layer, and preferably the substrate layer, to provide chemical bonding between the two layers, e.g., ester linkages or a combination of ester and urethane linkages, resulting from the curing operation.

The strength of the bonding between the cosmetic and substrate layers, and therefore the impact strength and resistance to delamination of the composite structure, depends to a large extent on the type and number of chemical linkages present. For a given cosmetic layer (a) and substrate layer (b), it is a fairly simple matter to determine the optimum compositional and processing variables required to achieve a predetermined bond strength. Ordinarily, in accordance with the present invention, one can typically obtain bond strengths on an order of from about 80 to about 150 lbs with from about 100 to about 130 lbs being routinely achievable for most composites possessing a foamed substrate layer. Such bond strengths impart a high level of impact resistance to the composite of this invention as well as a high level of resistance of delamination when the composite is subjected to an abrupt change of temperature. For instance, a change to or from ambient temperature and 180°F, rapid temperature changes of this magnitude being typically encountered with bathtubs, wash sinks, etc.

Although a variety of fabrication techniques can be used to provide a composite and articles made from the composite herein, i.e., composite-based plumbing fixtures and the like, the considerable production economies realized with RIM and RRIM procedures make these especially useful techniques for practicing the invention. RIM and RRIM are useful both in the case of unfoamed as well as foamed substrates. Packing densities, i.e., the ratio of the volume of resin mixture to the volume of the mold, are from about 20% to about 100% are advantageously employed.

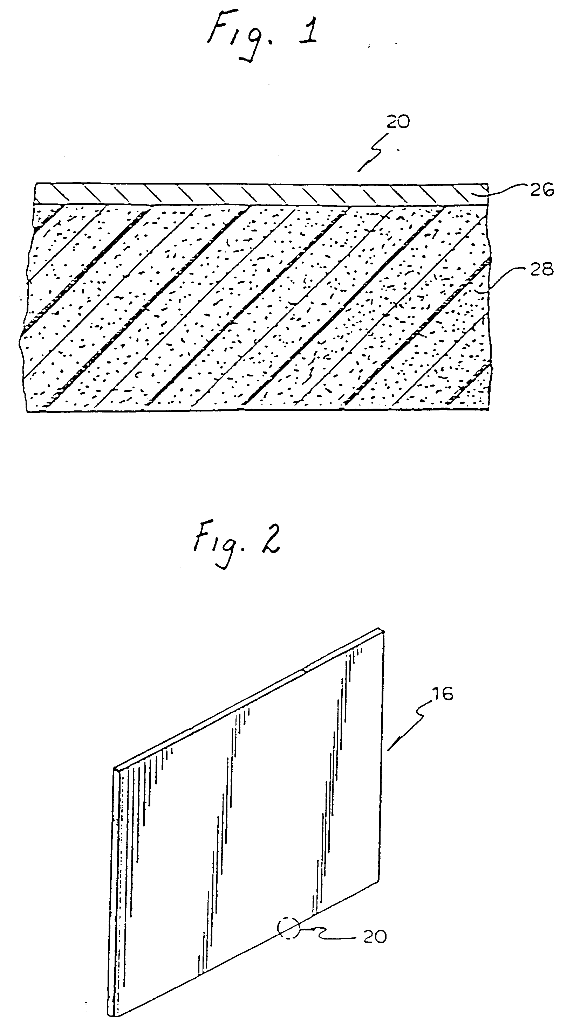

Referring now to the drawings, polymer composite 20 of Fig. 1 includes a cosmetic, or finish, layer 26 which is chemically bonded to reinforced, cross-linked isocyanate-modified dense thermosetting unsaturated polyester dense foam substrate layer 28 through urethane linkages formed during the curing of layer 26. The average thickness of cosmetic layer 26, advantageously fabricated from a glossy, abrasion-resistant resin such as polymethacrylate, can range from about 0.5 to about 5 cm. The average thickness of dense foam substrate layer 28 can range from about 5 to about 25 cm and the density of the foam can range from about 20 to about 90 lbs per cubic foot.

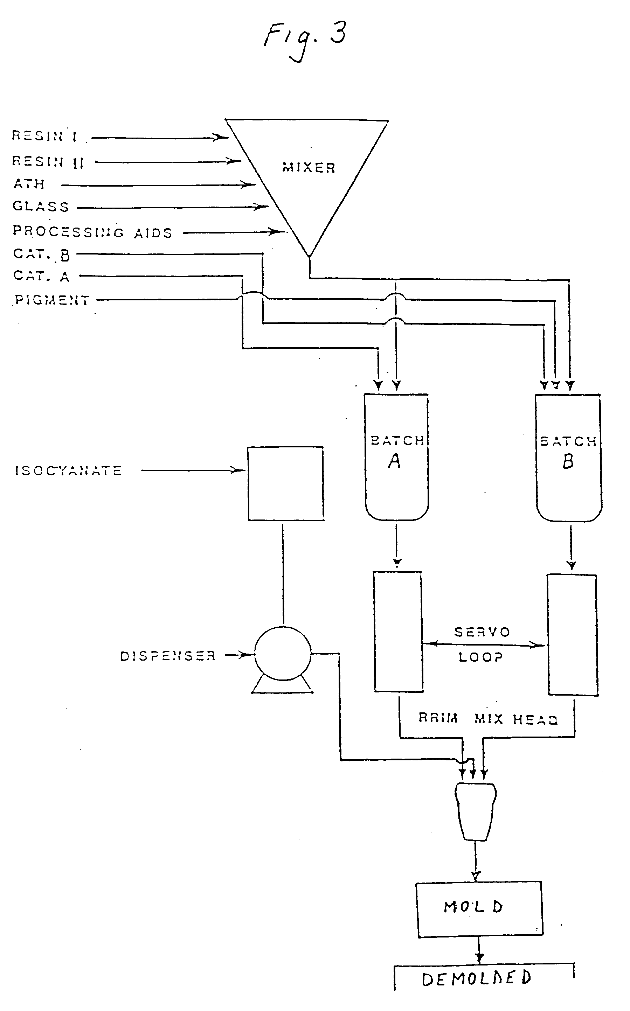

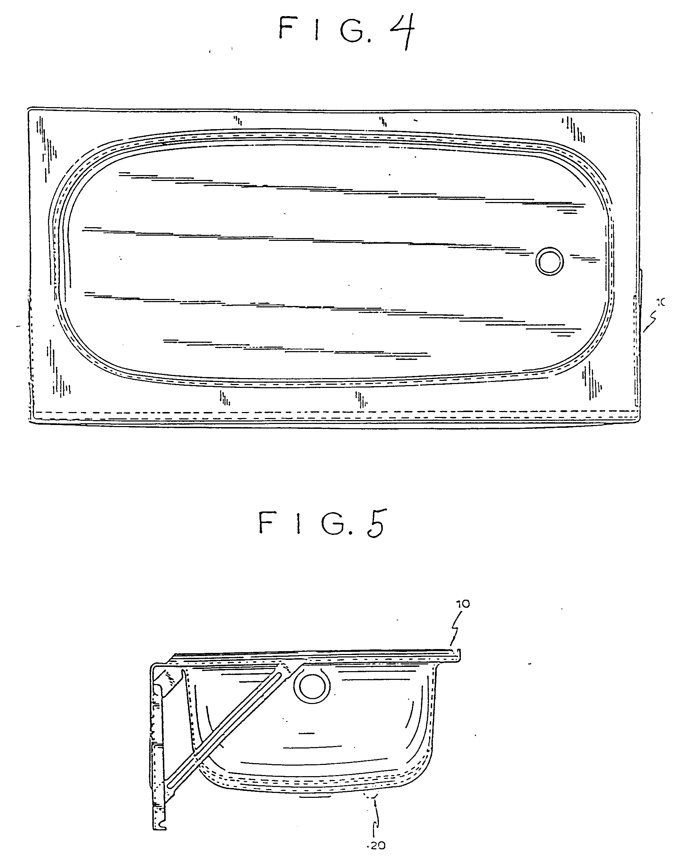

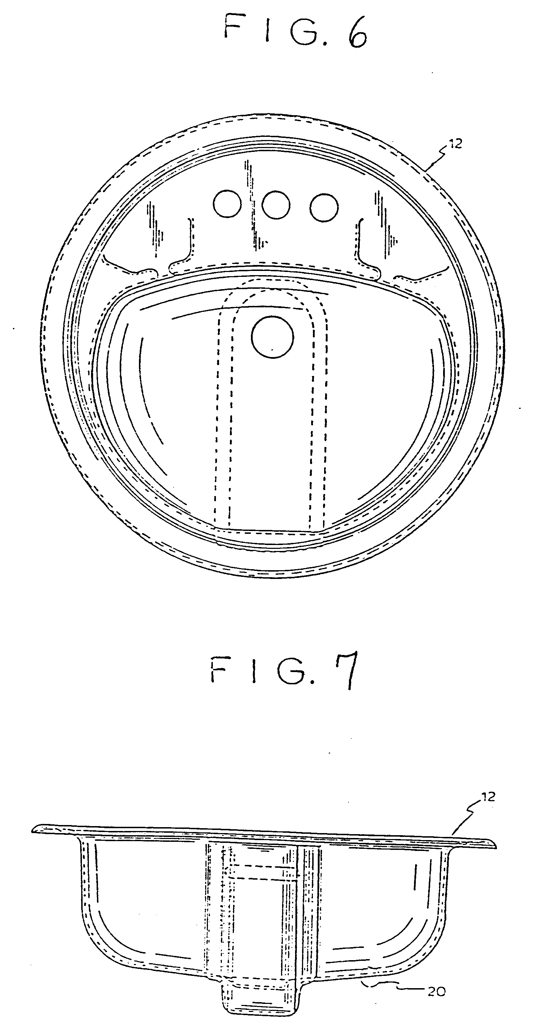

Polymer composite 20 can be manufactured in various ways, e.g., by spray-up, hand lay-up, RIM, RRIM or RTM techniques. Fig. 3 schematically illustrates the use of known and conventional RRIM procedures in manufacturing the composite of this invention, e.g., in the form of the panel shown in Fig. 2., and in the manufacture of the bathtub shown in Figs. 4-5. To manufacture the panel of Fig. 2 in accordance with these procedures, flat acrylic sheet of approximately 3 cm average thickness is supported on one surface of a mold. Likewise, to manufacture the bathtub of Figs. 4-5 in accordance with these procedures, an acrylic sheet of approximately 3 cm average thickness which has been thermoformed to provide a shell, or insert, conforming to the shape of the finished bathtub is supported on one surface of a male mold element. Then, a solution of chemical bonding agent containing 50 weight parts of a thermosetting phenolic resin (25 weight percent), thermoplastic urethane elastomer (2 weight percent) and organo functional silane (1 weight percent) in a solvent system containing alcohol (2 weight percent), methyl ethyl ketone (35 weight percent), ethylene glycol monoethyl ether acetate (28 weight percent) and xylene (7 weight percent) and 50 weight parts of methyl methacrylate solvent is applied to the exposed surface of the acrylic sheet. The methyl methacrylate component of the bonding agent causes some superficial dissolution of the surface of the acrylic sheet with the result that the thermosetting phenolic component of the bonding agent and the dissolved acrylic resin from a solution, or blend, presenting free hydroxyl groups for reaction with free isocyanate groups in the later-applied reaction mixture providing the substrate layer.

The components of the reinforced isocyanate-modified polyester dense foam reaction mixture which upon curing will provide the substrate layer of the polymeric composite structure are formulated into two separate batches, Batch A and Batch B. Initially, a mixing operation is carried out to provide the following Pre-Batch Mix:

### Pre-Batch Mix

| Weight Parts | Component |
|---|---|
| 80 | Unsaturated Polyresin Syrup Containing Vinyl Comonomer (Pioneer 236) |
| 20 | ASHLAND V110-2 Monomer (Ashland Chemical Company) |
| 100 | Aluminum trihydrate (as fire retardant) |
| 30 | 1/4" chopped glass fiber reinforcement |
| 0.3 | Silicone Surfactant (Dow Corning 193) |

Approximately equal amounts of the foregoing Pre-Batch Mix are incorporated in Batches A and B formulated as follows:

### Batch A

| Weight Parts | Component |
|---|---|
| - 115 | Pre-Batch Mix |
| 3 | Catalyst A (Dimethylethanolamine) |

### Batch B

| Weight Parts | Component |
|---|---|
| - 115 | Pre-Batch Mix |
| 1 | Catalyst B (Cumene Hydroperoxide) |
| 1 | Pigment |

Batches A and B are combined at the RRIM mixing head together with 20 weight parts of polymethylene polyphenylisocyanate (Papi 901 from Upjohn). A servo loop is provided to monitor and adjust the ratios of Batches A and B prior to reaching the mixing head. Within 2-4 minutes of the injection of a predetermined quantity of the combined batch reaction mixture into the closed mold (injection time of about 6-8 seconds), the composite structure possessing a dense foam substrate thickness of about 30 cm and a density of about 60 lb per cubic foot has attained a sufficient level of cure to permit demolding.

The polymeric composite article, i.e., the panel of Fig. 2 or the bathtub of Figs. 4-5, resulting from the foregoing RRIM molding operation is highly resistant to delamination when subjected to high impact forces or thermal shock. The surface of the acrylic cosmetic layer 26 is resistant to chipping, cracking or crazing when subjected to direct impact forces. In addition, the article so molded, i.e., a bathtub, resists deformation and pop off when it is subjected to flexural forces such as may be encountered during shipping and/or installation.

In summary, according to a specific application of the invention, there is provided a plumbing fixture constructed from a polymeric composite having good resistance to delamination which comprises:
a) a relatively thin cosmetic layer fabricated from an acrylic resin which, prior to the curing of a substrate layer in mutual contact therewith, possesses a free hydroxyl group-containing component on at least the surface thereof to be bonded to the substrate layer; and,
b) a relatively thick, reinforced, cross-linked, isocyanate-modified thermosetting unsaturated polyester and/or polyether dense foam substrate layer which, prior to curing, possesses a free isocyanate group-containing component such that upon curing while in mutual contact with the cosmetic layer, the substrate layer becomes bonded to the cosmetic layer through urethane linkages formed by reaction of free hydroxyl groups of the cosmetic layer with free isocyanate groups of the substrate layer.

## Claims

1. A polymeric composite of high impact strength and delamination resistance comprising a polymeric cosmetic layer, and a cross-linked isocyanate-modified thermosetting unsaturated polyester and/or polyether resin substrate layer in mutual contact therewith, wherein:
a) the polymeric cosmetic layer, prior to the curing of the substrate layer possesses, at least on the surface thereof to be bonded to the substrate layer, a functionality chemically reactive directly or via a bifunctional coupling agent with an isocyanate functionality of the substrate layer; and
b) the cross-linked isocyanate-modified thermosetting unsaturated polyester and/or polyether resin substrate layer, prior to curing, possesses a free isocyanate functionality such that upon curing while in mutual contact with a surface of the cosmetic layer, the substrate layer becomes bonded to the cosmetic layer through chemical linkages formed i) by reaction of the chemically reactive functionality and the isocyanate functionality or ii) by reaction of the chemically reactive functionality respectively with a first reactive functional group of the bifunctional coupling agent and reaction of the isocyanate functionality with the second functional groups of the bifunctional coupling agent.

2. A polymeric composite according to claim 1 obtainable by the following steps:
i) providing a polymeric cosmetic layer which possesses a functionality chemically reactive with isocyanate groups either directly or via a coupling agent on at least the surface thereof to be bonded to the substrate layer;
ii) contacting the surface of the cosmetic layer which possesses the said chemically-reactive functionality with a precursor composition for the substrate layer comprising an unsaturated polyester and/or polyether possessing one or more hydrogen containing groups, copolymerisation monomers containing terminal vinyl groups, a polymerisation initiator, and an organic polyisocyanate;
iii) subjecting the contacting cosmetic layer and substrate layer to conditions effecting the cure of the latter and further effecting i) the reaction of the said chemically-reactive functionality of the cosmetic layer with isocyanate groups of the substrate layer or ii) the reaction of the said chemically reactive functionality with a first functional group of the bifunctional coupling agent and the isocyanate groups with the second functionality of the bifunctional coupling agent.

3. The polymeric composite according to claim 1 or 2 wherein the polymeric cosmetic layer comprises at least one polymer which possesses the said chemically-reactive functionality as part of its molecular structure.

4. The polymeric composite according to any preceding claim wherein the polymeric cosmetic layer comprises a first layer which lacks the said chemically-reactive functionality but at least at its surface is blended with a second polymer which possesses the chemically-reactive functionality.

5. The polymeric composite according to claim 4 wherein the first polymer is an acrylic resin and the second polymer is a free hydroxyl group-containing thermosetting phenolic resin.

6. The polymeric composite according to any preceding claim wherein the substrate layer is a foam.

7. The polymeric composite according to claim 6, wherein the substrate layer is a dense foam.

8. The polymeric composite according to any preceding claim wherein the substrate layer contains a reinforcement.

9. The polymeric composite according to any preceding claim wherein the substrate layer is derived from a mixture of unsaturated liquid polyesters at least one of which possesses terminal ethylenic unsaturation and at least one functional group selected from the group consisting of hydroxyl, carboxylic acid and amine groups.

10. The polymeric composite according to any preceding claim wherein the substrate layer is derived from a mixture of unsaturated liquid polyesters at least one of which is obtained by reacting methacrylic acid, maleic anhydride and propylene oxide, optionally followed by isomerization of the resulting maleate ester to the corresponding fumarate estermonoalcohol.

11. The polymeric composite according to claim 1 wherein the polymeric cosmetic layer comprises an acrylic resin, the surface of which in mutual contact with the substrate layer is a blend of the acrylic resin and a free hydroxyl group-containing thermosetting resin, the substrate layer is a reinforced, dense, foamed polyester resin possessing, prior to curing, free isocyanate groups, the cosmetic layer being chemically bonded to the cured substrate layer.

12. The polymeric composite according to any preceding claim fabricated as a structural component such as a door; or a body panel for a vehicle.

13. The polymeric composite of any one of claims 1 to 11, fabricated as a plumbing fixture, such as a bath-tub, sink, basin, shower receptor or wall panel associated with a shower receptor, wherein:
a) the polymeric cosmetic layer is a relatively thin layer; and
b) the substrate layer is a relatively thick, reinforced dense foam layer.

14. A method for forming a polymeric composite of high impact strength and resistance to delamination comprising a polymeric cosmetic layer, and a cross-linked isocyanate-modified thermosetting unsaturated polyester and/or polyether resin substrate layer, wherein the method comprises the steps of:
a) providing a polymeric cosmetic layer which possesses on at least the surface thereof to be bonded to the substrate layer a functionality chemically reactive directly or via a bifunctional coupling agent with an isocyanate functionality of the substrate layer;
b) contacting the surface of the cosmetic layer which possesses the said chemically-reactive functionality with the precursor components of the cross-linked isocyanate-modified thermosetting unsaturated polyester and/or polyether resin substrate layer, at least one component of which contains a free isocyanate functionality capable, under conditions resulting in the cure of the substrate layer, of forming chemical linkages between the cosmetic layer and the substrate layer by reaction of the chemically reactive functionality and the isocyanate functionality or by reaction of the chemically reactive functionality and the isocyanate functionality respectively with the respective functional groups of the bifunctional coupling agent; and
c) subjecting the combined cosmetic layer and substrate layer to conditions effecting the cure of the latter and the reaction of the chemically-reactive functionality and the isocyanate functionality, or the reaction of the chemically reactive functionality and the isocyanate functionality with the respective functional groups of the bifunctional coupling agent, thereby providing the polymeric composite.

15. The method of claim 14 wherein step (b) is carried out employing a reaction injection moulding (RIM) or reinforced resin or reaction injection moulding (RRIM) procedure.

16. The method of claim 14 or claim 15 wherein there is applied to the surface of the resin constituting the cosmetic layer a primer comprising a solution of thermosetting phenolic resin having capability for dissolving the resin of the cosmetic layer.

17. The method of any one of claims 14 to 16, wherein said polymeric composite is formed into a plumbing fixture.

## Patentansprüche

1. Polymerzusammensetzung mit hoher Schlagfestigkeit und Delaminierungswiderstandsfähigkeit, die eine polymere, kosmetische Schicht und eine in gegenseitigem Kontakt mit dieser stehende, vernetzte isozyanat-modifizierte Substratschicht aus wärmehärtbarem Harz von ungesättigtem Polyester und/oder Polyäther enthält, worin:
a) die polymere, kosmetische Schicht, vor dem Aushärten der Substratschicht, zumindest an jener Oberfläche, die an die Substratschicht gebunden werden soll, funktionelle Gruppen besitzt, die direkt oder über ein bifunktionelles Bindemittel mit funktionellen Isocyanatgruppen der Substratschicht chemisch reaktiv sind; und
b) die vernetzte isocyanat-modifizierte Substratschicht aus wärmehärtbarem Harz von ungesättigtem Polyester und/oder Polyäther vor dem Aushärten eine freie Isocyanat-Funktionalität besitzt, sodaß beim Aushärten, während sie im gegenseitigen Kontakt mit einer Oberfläche der kosmetischen Schicht ist, die Substratschicht an die kosmetische Schicht durch chemische Bindungen gebunden wird, die gebildet werden durch i) Reaktion der chemisch reaktiven funktionellen Gruppen und der funktionellen Isocyanatgruppen oder ii) Reaktion der chemisch reaktiven funktionellen Gruppen mit jeweils einer ersten reaktiven funktionellen Gruppe des biofunktionellen Bindemittels und Reaktion der funktionellen Isocyanatgruppen mit den zweiten funktionellen Gruppen des biofunktionellen Bindemittels.

2. Polymerzusammensetzung gemäß Anspruch 1, die durch die folgenden Schritte zu erhalten ist:
i) eine polymere, kosmetische Schicht wird hergestellt, welche funktionelle Gruppen besitzt, die direkt oder über ein Bindemittel chemisch reaktiv mit Isocyanatgruppen an zumindest einer ihrer Oberflächen, die an die Substratschicht gebunden werden soll, sind;
ii) die Oberfläche der kosmetischen Schicht, die diese chemisch reaktiven, funktionellen Gruppen besitzt, wird mit einer Vorzusammensetzung für die Substratschicht, welche einen ungesättigten Polyester und/oder Polyäther mit einer oder mehreren Wasserstoff enthaltenden Gruppen, Vinyl-Endgruppen enthaltende Kopolymerisationmonomere, einen Polymerisationsinitiator und ein organisches es Polyisocyanat enthält, in Kontakt gebracht;
iii) die in Kontakt stehenden Schichten, die kosmetische Schicht und die Substratschicht, werden Bedingungen unterworfen, die die Aushärtung der letzteren und i) die Reaktion der chemisch reaktiven, funktionellen Gruppen der kosmetischen Schicht mit den Isocyanatgruppen der Substratschicht oder ii) die Reaktion der chemisch reaktiven, funktionellen Gruppen mit einer ersten funktionellen Gruppe des bifunktionellen Bindemittels und der Isocyanatgruppen mit der zweiten funktionellen Gruppe der bifunktionellen Bindemittels bewirken.

3. Polymere Zusammensetzung gemäß Anspruch 1 oder 2, worin die polymere, kosmetische Schicht zumindest ein Polymer enthält, das diese chemisch reaktiven, funktionellen Gruppen als Teil seiner Molekularstruktur enthält.

4. Polymere Zusammensetzung gemäß einem der vorhergehenden Ansprüche, dadurch gekennzeichnet, daß die polymere, kosmetische Schicht eine erste Schicht enthält, die die chemisch reaktiven funktionellen Gruppen entbehrt, aber zumindest an ihrer Oberfläche mit einem zweiten Polymer vermischt ist, welches die chemisch reaktiven funktionellen Gruppen besitzt.

5. Polymere Zusammensetzung gemäß Anspruch 4, dadurch gekennzeichnet, daß das erste Polymer ein Acrylharz ist und das zweite Polymer ein wärmehärtbares Phenolharz ist, das freie Hydroxylgruppen enthält.

6. Polymere Zusammensetzung gemäß einem der vorhergehenden Ansprüche, dadurch gekennzeichnet, daß die Substratschicht ein Schaum ist.

7. Polymere Zusammensetzung gemäß Anspruch 6, dadurch gekennzeichnet, daß die Substratschicht ein Kompaktschaum ist.

8. Polymere Zusammensetzung gemäß einem der vorhergehenden Ansprüche, dadurch gekennzeichnet, daß die Substratschicht eine Verstärkung enthält.

9. Polymere Zusammensetzung gemäß einem der vorhergehenden Ansprüche, dadurch gekennzeichnet, daß die Substratschicht aus einer Mischung aus ungesättigten Flüssigpolyestern erhalten wird, von denen zumindest einer in bezug auf Äthylen endständig ungesättigt ist und zumindest eine funktionelle Gruppe, ausgewählt aus den Gruppen bestehend aus Hydroxyl-, Karbonsäure- und Amingruppen besitzt.

10. Polymere Zusammensetzung gemäß einem der vorhergehenden Ansprüche, dadurch gekennzeichnet, daß die Substratschicht aus einer Mischung von ungesättigten Flüssigpolyestern erhalten wird, von denen zumindest einer durch Reaktion von Methacrylsäure, Maleinanhydrid und Propylenoxid, eventuelle gefolgt durch Isomerisation des resultierenden Maleatesters zu dem entsprechenden Fumaratestermonoalkohol erhalten werden.

11. Polymere Zusammensetzung gemäß Anspruch 1, dadurch gekennzeichnet, daß die polymere, kosmetische Schicht aus einem Acrylharz besteht, dessen Oberfläche, die im gegenseitigen Kontakt mit der Substratschicht ist, eine Mischung des Acrylharzes und eines wärmehärtbaren Harzes ist, das freie Hydroxylgruppen enthält, daß die Substratschicht ein verstärktes, dichtes, schaumförmiges Polyesterharz ist, welches vor dem Aushärten freie Isocyanatgruppen enthält, wobei die kosmetische Schicht chemisch an die ausgehärtete Substratschicht gebunden ist.

12. Polymere Zusammensetzung gemäß einem der vorhergehenden Ansprüche, die eine strukturelle Komponente, wie eine Tür oder eine Karosserie für ein Fahrzeug verarbeitet ist.

13. Polymere Zusammensetzung nach einem der Ansprüche 1 bis 11, die als Installationsvorrichtung, wie eine Badewanne, eine Spüle, ein Becken, eine Duschtasse oder eine an eine Duschtasse anschließende Wandplatte gefertigt ist, dadurch gekennzeichnet, daß
a) die polymere kosmetische Schicht eine relativ dünne Schicht ist; und
b) die Substratschicht eine relativ dicke, verstärkte Kompaktschaumschicht ist.

14. Verfahren zur Bildung einer Polymerzusammensetzung mit hoher Schlagfestigkeit und Widerstandsfähigkeit gegen Delamination, die eine polymere kosmetische Schicht und eine vernetzte isocyanatmodifizierte, wärmehärtbare Substratschicht aus ungesättigtem Polyester und/oder Polyätherharz enthält, dadurch gekennzeichnet, daß das Verfahren die Schritte enthält:
a) eine polymere kosmetische Schicht wird hergestellt, die zumindest an der Oberfläche, die an die Substratschicht gebunden werden soll, funktionelle Gruppen besitzt, die direkt oder über ein bifunktionelles Bindemittel mit funktionellen Isocyanatgruppen der Substratschicht chemisch reaktiv sind;
b) die Oberfläche der kosmetischen Schicht, welche die chemisch reaktiven funktionellen Gruppen besitzt, wird mit der Vorzusammensetzung der vernetzten isocyanat-modifizierten, wärmehärtbaren Substratschicht aus ungesättigtem Polyester und/oder Polyätherharz in Kontakt gebracht, wobei mindestens ein Bestandteil der Vorzusammensetzung eine freie Isocyanatfunktionalität enthält, die fähig ist, unter Bedingungen, die durch das Aushärten der Substratschicht entstehen, chemische Bindungen zwischen der kosmetischen Schicht und der Substratschicht durch Reaktion der chemisch reaktiven funktionellen Gruppen und der funktionellen Isocyanatgruppen oder durch Reaktion der chemisch reaktiven funktionellen Gruppen und der funktionellen Isocyanatgruppen mit jeweils den entsprechenden funktionellen Gruppen des bifunktionellen Bindemittels auszubilden; und
c) die verbundene kosmetische und die Substratschicht werden Bedingungen unterworfen, die ein Aushärten der letzteren und die Reaktion der chemisch reaktiven funktionellen Gruppen und der funktionellen Isocyanatgruppen oder der Reaktion der chemisch reaktiven funktionellen Gruppen und der funktionellen Isocyanatgruppen mit den jeweiligen funktionellen Gruppen des bifunktionellen Bindemittels bewirken und dadurch die Polymerzusammensetzung schaffen.

15. Verfahren nach Anspruch 14, dadurch gekennzeichnet, daß der Schritt (b) unter Verwendung eines Reaction-Injection-Moulding (RIM) oder eines Reinforced Resin oder Reaction-Injection Moulding (RRIM)-Verfahren ausgeführt wird.

16. Verfahren nach Anspruch 14 oder 15, dadurch gekennzeichnet, daß auf die Oberfläche des Harzes, welches die kosmetische Schicht bildet, ein Grundiermittel aufgebracht wird, das eine Lösung aus wärmehärtbarem Phenolharz enthält, welches die Fähigkeit hat, das Harz der kosmetischen Schicht zu lösen.

17. Verfahren nach einem der Ansprüche 14 bis 16, dadurch gekennzeichnet, daß die Polymerzusammensetzung in eine Installationsvorrichtung geformt wird.

## Revendications

1. Composite polymère ayant une résistance au choc et une résistance au délaminage élevées, comprenant une couche cosmétique polymère et une couche de substrat de résine polyester et/ou polyéther insaturée thermodurcissable, modifiée par les isocyanates, réticulée, en contact avec celle-ci, dans lequel :
a) la couche cosmétique polymère, avant le durcissement de la couche de substrat, possède, au moins sur sa face à lier à la couche de substrat, une fonctionnalité chimiquement réactive, directement ou par l'intermédiaire d'un agent de couplage bifonctionnel, avec une fonctionnalité isocyanate de la couche de substrat ; et
b) la couche de substrat de résine polyester et/ou polyéther insaturée thermodurcissable, modifiée par les isocyanates, réticulée, possède, avant le durcissement, une fonctionnalité isocyanate libre, de telle sorte que par durcissement, alors qu'elle est en contact avec une face de la couche cosmétique, la couche de substrat se lie à la couche cosmétique par des liaisons chimiques formées 1) par réaction de la fonctionnalité chimiquement réactive et de la fonctionnalité isocyanate, ou 2) par réaction de la fonctionnalité chimiquement réactive respectivement avec un premier groupe fonctionnel réactif de l'agent de couplage bifonctionnel et par réaction de la fonctionnalité isocyanate avec le second groupe fonctionnel de l'agent de couplage bifonctionnel.

2. Composite polymère selon la revendication 1, pouvant être obtenu par les stades suivants :
1) réaliser une couche cosmétique polymère possédant une fonctionnalité chimiquement réactive avec des groupes isocyanate soit directement, soit par l'intermédiaire d'un agent de couplage, sur au moins une de ses faces à lier à la couche de substrat ;
2) mettre en contact la face de la couche cosmétique qui possède cette fonctionnalité chimiquement réactive avec une composition de précurseur pour la couche de substrat comprenant un polyester et/ou un polyéther insaturés possédant un ou plusieurs groupes contenant des atomes d'hydrogène, des monomères de copolymérisation contenant des groupes vinyle terminaux, un agent d'amorçage de la polymérisation et un polyisocyanate organique ;
3) soumettre la couche cosmétique et la couche de substrat en contact à des conditions effectuant le durcissement de cette dernière et effectuant en outre 1) la réaction de cette fonctionnalité chimiquement réactive de la couche cosmétique avec les groupes isocyanate de la couche de substrat ou 2) la réaction de cette fonctionnalité chimiquement réactive avec un premier groupe fonctionnel de l'agent de couplage bifonctionnel et les groupes isocyanate avec la seconde fonctionnalité de l'agent de couplage bifonctionnel.

3. Composite polymère selon la revendication 1 ou 2, dans lequel la couche cosmétique polymère comprend au moins un polymère qui possède cette fonctionnalité chimiquement réactive en tant que partie de sa structure moléculaire.

4. Composite polymère selon l'une quelconque des revendications précédentes, dans lequel la couche cosmétique polymère comprend une première couche qui ne possède pas cette fonctionnalité chimiquement réactive mais qui est mélangée au moins sur sa surface avec un second polymère qui possède la fonctionnalité chimiquement réactive.

5. Composite polymère selon la revendication 4, dans lequel le premier polymère est une résine acrylique et le second polymère est une résine phénolique thermodurcissable contenant des groupes hydroxyle.

6. Composite polymère selon l'une quelconque des revendications précédentes, dans lequel la couche de substrat est une mousse.

7. Composite polymère selon la revendication 6, dans lequel la couche de substrat est une mousse dense.

8. Composite polymère selon l'une quelconque des revendications précédentes, dans lequel la couche de substrat contient un renforcement.

9. Composite polymère selon l'une quelconque des revendications précédentes, dans lequel la couche de substrat est obtenue à partir d'un mélange de polyesters liquides insaturés dont l'un au moins possède une insaturation éthylénique terminale et au moins un groupe fonctionnel choisi parmi les groupes hydroxyle, acide carboxylique et amine.

10. Composite polymère selon l'une quelconque des revendications précédentes, dans lequel la couche de substrat est obtenue à partir d'un mélange de polyesters liquides insaturés dont l'un au moins est obtenu par réaction de l'acide méthacrylique, de l'anhydride maléique et de l'oxyde de propylène, suivie si on le désire d'une isomérisation de l'ester maléique obtenu pour donner le monoalcool d'ester fumarique correspondant.

11. Composite polymère selon la revendication 1, dans lequel la couche cosmétique polymère comprend une résine acrylique dont la surface en contact avec la couche de substrat est un mélange de la résine acrylique et d'une résine thermodurcissable contenant des groupes hydroxyle libres, la couche de substrat est une résine polyester expansée, dense, renforcée possédant avant le durcissement des groupes isocyanate libres, la couche cosmétique étant liée chimiquement à la couche de substrat durcie.

12. Composite polymère selon l'une quelconque des revendications précédentes, transformé en un constituant structural tel qu'une porte , ou un panneau de carrosserie pour un véhicule.

13. Composite polymère selon l'une quelconque des revendications 1 à 11, transformé en un appareil sanitaire tel qu'une baignoire, un évier, un bassin, un récepteur de douche ou un panneau mural associé à un récepteur de douche, dans lequel :
a) la couche cosmétique polymère est une couche relativement mince ; et
b) la couche de substrat est une couche de mousse dense renforcée relativement épaisse.

14. Procédé pour former un composite polymère ayant une résistance au choc et une résistance au délaminage élevées, comprenant une couche cosmétique polymère et une couche de substrat de résine polyester et/ou polyéther insaturée thermodurcissable modifiée par les isocyanates, réticulée, comprenant les stades consistant à :
a) réaliser une couche cosmétique polymère qui possède sur au moins une de ses faces à lier à la couche de substrat une fonctionnalité chimiquement réactive, directement ou par l'intermédiaire d'un agent de couplage bifonctionnel, avec une fonctionnalité isocyanate de la couche de substrat ;
b) mettre en contact la face de la couche cosmétique qui possède cette fonctionnalité chimiquement réactive avec les constituants précurseurs de la couche de substrat de résine polyester et/ou polyéther insaturée, thermodurcissable modifiée par les isocyanates, réticulée, dont au moins un constituant contient une fonctionnalité isocyanate libre capable, dans les conditions de durcissement de la couche de substrat, de former des liaisons chimiques entre la couche cosmétique et la couche de substrat par réaction de la fonctionnalité chimiquement réactive et de la fonctionnalité isocyanate ou par réaction de la fonctionnalité chimiquement réactive et de la fonctionnalité isocyanate, respectivement, avec les groupes fonctionnels de l'agent de couplage bifonctionnel ; et
c) soumettre la couche cosmétique et la couche de substrat combinées à des conditions effectuant le durcissement de cette dernière et la réaction de la fonctionnalité chimiquement réactive et de la fonctionnalité isocyanate, ou la réaction de la fonctionnalité chimiquement réactive et de la fonctionnalité isocyanate avec les groupes fonctionnels respectifs de l'agent de couplage bifonctionnel, réalisant ainsi le composite polymère.

15. Procédé selon la revendication 14, dans lequel le stade (b) est effectué en utilisant une technique de moulage par injection avec réaction (RIM) ou de moulage de résine renforcée ou de moulage par injection avec réaction (RRIM).

16. Procédé selon les revendications 14 ou 15, dans lequel on applique sur la surface de la résine constituant la couche cosmétique un primaire comprenant une solution d'une résine phénolique thermodurcissable capable de dissoudre la résine de la couche cosmétique.

17. Procédé selon l'une que conque des revendications 14 à 16, dans lequel ce composite polymère est transformé en un appareil sanitaire.
